# EUROPÄISCHE PATENTSCHRIFT

(11) **EP 2 851 533 B1**
(45) Veröffentlichungstag und Bekanntmachung des Hinweises auf die Patenterteilung: **01.03.2017**
(21) Anmeldenummer: 14181183.6
(22) Anmeldetag: 15.08.2014
(51) Int. Cl.: F01N 13/18, F16L 27/10, F16L 27/111, F16L 51/02, F16L 23/024, F16L 27/11

(54) **Flexibles Leitungselement**
Flexible pipe element
Élément de conduite flexible

(30) Priorität: 20.09.2013 DE 102013219005
(43) Veröffentlichungstag der Anmeldung: 25.03.2015
(73) Patentinhaber: Witzenmann GmbH, 75175 Pforzheim (DE)
(72) Erfinder: Cycon, Alexander, 75228 Ispringen (DE); Frühsorger, Eugen, 74374 Zaberfeld (DE); Hardjosoekatmo, Alyssa, 76131 Karlsruhe (DE)
(74) Vertreter: Lemcke, Brommer & Partner Patentanwälte Partnerschaft mbB

(56) Entgegenhaltungen:
- EP-A2- 0 837 230
- DE-A1- 10 021 179
- DE-A1-102010 021 014
- DE-U1- 20 023 409
- FR-A1- 2 839 135

## Beschreibung

Die Erfindung betrifft ein flexibles Leitungselement aus Metall nach dem Oberbegriff des Anspruchs 1. Ein solches flexibles Leitungselement umfasst mindestens einen ringgewellten oder schraubengangförmig gewellten Balgabschnitt und mindestens einen endständig angeordneten Anschlussbord zum Anschließen des flexiblen Leitungselements an ein weiterführendes Leitungselement oder ein Anschlussteil. Am Anschlussbord ist ein Flanschelement mit einer Stirnfläche angebracht, von der zumindest ein Bereich als Dichtfläche dient. Der Anschlussbord ist an der Stirnfläche des Flanschelements radial nach außen weisend umgebördelt, so dass er beim Anschließen des flexiblen Leitungselements an ein weiterführendes Leitungselement bzw. ein Anschlussteil einen Teil der Stirnfläche des Flanschelements überdeckt und/oder einen Teil der Dichtfläche des Flanschelements bildet.

Aufgrund des umgebördelten Anschlussbords ist das Flanschelement unverlierbar am flexiblen Leitungselement angebracht, auch wenn es nicht mit diesem verschweißt, verschraubt oder auf sonstige Art verbunden ist. Wenn das Flanschelement mit einem Gegenstück am weiterführenden Leitungselement bzw. am Anschlussteil in Anlage gebracht wird, kommt der umgebördelte Anschlussbord zwischen das Flanschelement und sein Gegenstück zu liegen, so dass insgesamt eine feste Verbindung aller beteiligten Bauteile entsteht, wenn die Flanschverbindung fertiggestellt ist.

In der Tatsache, dass der umbebördelte Anschlussbord zwischen dem Flanschelement und seinem Gegenstück zu liegen kommt, liegt auch das Problem beim Anschließen eines flexiblen Leitungselements der vorliegenden Art. Denn im Stand der Technik wird der Anschlussbord so umgebördelt, dass er radial nach außen weist, d.h. einen Winkel von 90° zwischen sich und einer Längsachse des flexiblen Leitungselements einschließt. Beim Anschließen des flexiblen Leitungselements an ein weiterführendes Leitungselement bzw. ein Anschlussteil wird der umgebördelte Anschlussbord im Stand der Technik zu einem Teil der Dichtfläche des Flanschelements. Dies führt allerdings oft zu einer geringen Flächenpressung an den Dichtflächen der Flanschverbindung, so dass die Flanschverbindung nicht absolut dicht ist oder für eine ausreichende Dichtheit zusätzliche Dichtelemente vorgesehen werden müssen.

Um die Dichtheit einer Flanschverbindung bei einem flexiblen Leitungselement der vorliegenden Art zu verbessern, ist in der EP 2 063 079 A1 vorgeschlagen worden, die Dichtfläche des Flanschelements als im Querschnitt konvex gekrümmte Fläche auszubilden, so dass sich beim Verbinden des solcherart modifizierten Flanschelements mit einem Gegenstück an einem weiterführenden Leitungselement oder einem Anschlussteil eine umlaufende Liniendichtung mit ausreichend hohen Flächenpressungen für eine metallische Dichtung ergibt. Hierfür muss jedoch das Flanschelement als Sonderanfertigung zur Verfügung gestellt werden, was in der Regel zusätzliche Kosten verursacht.

Die FR 2 839 135 A1 zeigt eine gattungsgemäße Flanschverbindung bei einem flexiblen Leitungselement.

Der vorliegenden Erfindung liegt daher die Aufgabe zugrunde, ein flexibles Leitungselement der vorliegenden Art so weiterzubilden, dass eine dichte Flanschverbindung mit einem weiterführenden Leitungselement oder Anschlussteil hergestellt werden kann, ohne zusätzliche Dichtelemente oder eine Sonderanfertigung für das Flanschelement vorsehen zu müssen.

Gelöst ist diese Aufgabe durch ein flexibles Leitungselement mit den Merkmalen des Anspruchs 1. Bevorzugte Ausgestaltungen des erfindungsgemäßen flexiblen Leitungselements sind in den Ansprüchen 2 bis 7 niedergelegt.

Das flexible Leitungselement weist einen umgebördelte Bereich des Anschlussbords eine Trichterform auf und schließt einen Winkel < 90° zwischen sich und einer Längsachse des flexiblen Leitungselements ein, wobei es nicht zwingend einen Teil der Dichtfläche bildet, sondern alternativ oder zusätzlich beim Anschließen des flexiblen Leitungselements an ein weiterführendes Leitungselement oder Anschlussteil einen Teil der Stirnfläche des Flanschelements überdeckt. Die Trichterform des umgebördelten Bereichs des Anschlussbords muss nur im Ausgangszustand, vor dem Anschließen des flexiblen Leitungselements an ein weiterführendes Leitungselement oder Anschlussteil, vorliegen, und diese Trichterform umfasst eine Kegelform oder Kegelstumpfform, eine konische Form, eine Kalottenform, eine aufgetulpte Form und dergleichen; die "Trichterwand" der Trichterform muss also nicht im Profil geradlinig ausgeformt sein, sondern kann konvex und/oder konkav verlaufen.

Der Winkel zwischen dem umgebördelten Bereich des Anschlussbords und der Längsachse des flexiblen Leitungselements liegt im Rahmen der vorliegenden Erfindung vorzugsweise zwischen 80° und 90° und besonders bevorzugt zwischen 85° und 90°. Die Abweichung von der radialen Ebene beträgt vorzugsweise also nur wenige Winkelgrade. Dadurch, dass der umgebördelte Bereich des Anschlussbords beim Herstellen einer Flanschverbindung in aller Regel zwischen den Dichtflächen der beiden Hälften der Flanschverbindung verpresst wird, bestehen vorteilhafterweise keine besonderen Anforderungen an die Maßhaltigkeit beim Umbördeln. Leichte Umfangswellungen im trichterförmigen Anschlussbord, die beim Umbördeln entstehen können, oder eine Längsschweißnaht im Anschlussbord stören nicht, da beim Herstellen der Schweißverbindung eine einebnende Umformung zumindest der umlaufenden vorderen Kante des umgebördelten Anschlussbords erfolgt.

Als Anschlussbord im Sinne der vorliegenden Erfindung kann der bei einem Metallbalg in aller Regel vorhandene, endständige zylindrische Bord verwendet werden. Dieser Anschlussbord ist dann einstückig an den Balgabschnitt angeformt.

Als Anschlussbord im Rahmen der vorliegenden Erfindung kann alternativ auch eine stirnseitige Verlängerung eines koaxial innerhalb des Balgabschnitts angeordneten und mit diesem verbundenen Rohrelements dienen. Im letzteren Fall ist es unschädlich, wenn der etwa vorhandene, einstückig am Balgabschnitt angeformte Bord ebenfalls an der Stirnfläche des Flanschelements radial nach außen weisend umgebördelt wird. Dies kann ebenfalls in einer Trichterform erfolgt sein, jedoch auch in konventioneller Art und Weise in einem radial verlaufenden Bördel resultieren.

Der Anschlussbord ist im Rahmen der vorliegenden Erfindung vorzugsweise so dimensioniert, dass sein stirnseitiges Ende aufgrund der erfindungsgemäßen Trichterform eine umlaufende Kante bildet, die beim Anschließen des flexiblen Leitungselements an ein weiterführendes Leitungselement oder ein Anschlussteil, an dem ein Gegenstück zum Flanschelement angeordnet ist, mit einer Gegen-Dichtfläche des Gegenstücks eine umlaufende Liniendichtung bildet. Zumindest nach einer Verpressung beim Herstellen der Flanschverbindung sind die gegebenenfalls vorhandenen Unebenheiten und Umfangswellungen der umlaufenden Kante des stirnseitigen Endes des Anschlussbords egalisiert. Gemäß dieser Weiterbildung der vorliegenden Erfindung gibt es also nur vorteilhafte geringe Anforderungen an die Maßhaltigkeit beim Umbördeln des Anschlussbords.

Um die Flächenpressung an der Liniendichtung zu erhöhen, ist das Flanschelement in demjenigen Bereich seiner Stirnfläche, der vom umgebördelten Bereich des Anschlussbords zumindest beim Herstellen einer Flanschverbindung überdeckt wird, ebenfalls trichterförmig ausgebildet.

Denn dann wird der erfindungsgemäß trichterförmig umgebördelte Bereich des Anschlussbords beim Herstellen der Flanschverbindung nicht in eine radiale Ebene umgeformt bzw. verpresst, sondern er bleibt trichterförmig, wobei die trichterförmige Stirnfläche des Flanschelements hohe Kräfte auf die umlaufende Kante des stirnseitigen Endes des Anschlussbords ausübt.

In diesem Zusammenhang ist es zweckmäßig, wenn der trichterförmige Bereich der Stirnfläche des Flanschelements so dimensioniert ist, dass der daran anliegende Anschlussbord mit seinem stirnseitigen Ende eine umlaufende Kante bildet, die über eine radiale Ebene der Dichtfläche des Flanschelements übersteht. So bildet das stirnseitige Ende des umgebördelten Anschlussbords eine metallische Liniendichtung im Zusammenwirken mit der Gegen-Dichtfläche des Gegenstücks zum Flanschelement beim Herstellen einer Flanschverbindung. Diese metallische Liniendichtung bleibt durch Verpressen dauerhaft bestehen und gewährleistet eine absolut dichte Flanschverbindung.

Das im Rahmen der vorliegenden Erfindung eingesetzte Flanschelement kann ein herkömmlicher Rohrverbindungs-Flansch sein, jedoch auch ein Sternflansch, eine V-Bord-Hälfte und dergleichen mehr.

Das bevorzugte Einsatzgebiet eines erfindungsgemäß ausgestalteten flexiblen Leitungselements aus Metall ist die Abgasanlage eines Kraftfahrzeugs mit Verbrennungsmotor, wo das flexible Leitungselement als Kompensator zum Ausgleich von Wärmedehnungen oder als Entkoppelelement zum Aufnehmen und Entkoppeln von Schwingungen, die durch pulsierende Gasströme und bewegte Teile im Verbrennungsmotor entstehen, eingebaut ist.

Mehrere Ausführungsbeispiele für ein flexibles Leitungselement, das gemäß der vorliegenden Erfindung ausgestaltet ist, werden in den beigefügten Zeichnungen dargestellt und im Folgenden näher beschrieben und erläutert. Es zeigen:
- Figur 1: eine schematische seitliche Schnittdarstellung eines Ausführungsbeispiels für ein flexibles Leitungselement, mit einer Detaildarstellung des Details X;
- Figur 2: eine schematische seitliche Schnittdarstellung eines Ausführungsbeispiels für ein flexibles Leitungselement;
- Figur 3: eine schematische seitliche Schnittdarstellung eines Ausführungsbeispiels für ein erfindungsgemäßes flexibles Leitungselement, mit einer Detaildarstellung des Details Y;
- Figur 4: eine schematische seitliche Schnittdarstellung eines Ausführungsbeispiels für ein erfindungsgemäßes flexibles Leitungselement;
- Figur 5: eine schematische seitliche Schnittdarstellung eines Ausführungsbeispiels für ein erfindungsgemäßes flexibles Leitungselement, mit einer Detaildarstellung des Details Z;
- Figur 6: eine schematische seitliche Schnittdarstellung eines Ausführungsbeispiels für ein erfindungsgemäßes flexibles Leitungselement;

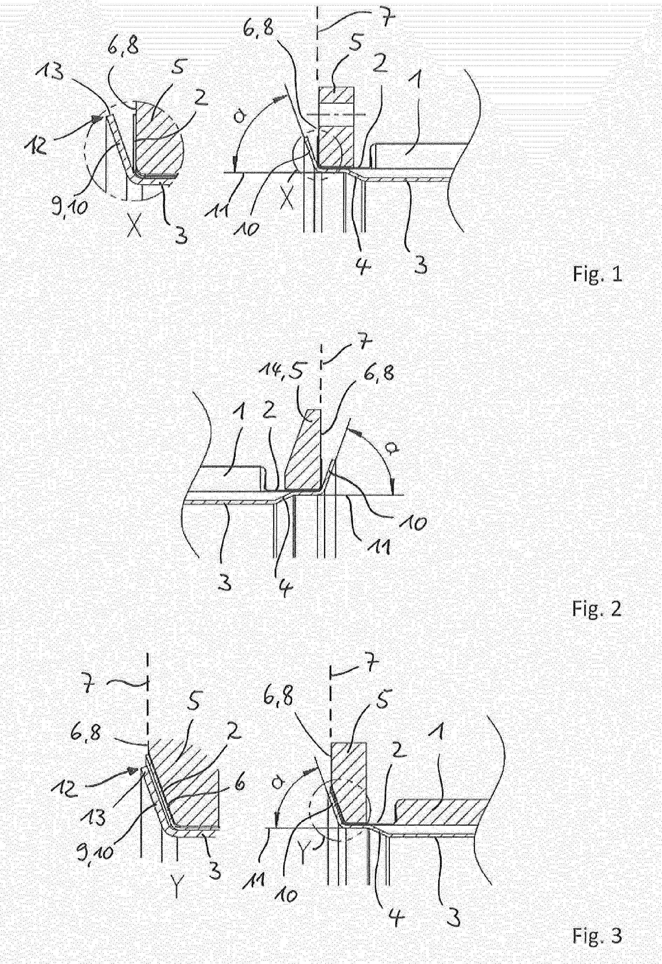

Das in Figur 1 dargestellte erste Ausführungsbeispiel für ein flexibles Leitungselement umfasst einen ringgewellten Metallbalg als Balgabschnitt 1, der sich an seinen beiden Enden in jeweils ein Bord 2 fortsetzt, der vorliegend die Form eines zylindrischen Glattrohrs aufweist. Das hier dargestellte flexible Leitungselement ist zum Einbau in eine Abgasanlage eines Kraftfahrzeugs mit Verbrennungsmotor vorgesehen, wo es als motornah angeordneter Kompensator zum Aufnehmen von Relativbewegungen zwischen Motor und Abgasanlage sowie Wärmeausdehnungen und dergleichen dient. Dementsprechend ist am Balgbord 2 ein als zylindrisches Glattrohr ausgebildetes Rohrelement 3 festgelegt, das sich koaxial innerhalb des Balgabschnitts 1 in diesen hinein erstreckt und als sogenanntes Flammschutzrohr den Balgabschnitt 1 gegen die heißen Abgase des Verbrennungsmotors schützt. Um die Beweglichkeit des Balgabschnitts 1 nicht zu beeinträchtigen, verjüngt sich das Rohrelement 3 vom Bord 2 ausgehend mittels einer Stufe 4 in das Innere des Balgabschnitts 1 hinein.

Zum Anschließen des vorliegenden flexiblen Leitungselements an die stromaufwärts weiterführende Leitung des (nicht dargestellten) Abgassystems dient ein hier als herkömmlicher Rohrleitungsflansch ausgebildetes Flanschelement 5 mit einer Stirnfläche 6, die vorliegend vollständig innerhalb einer radialen Ebene 7 verläuft und ganzflächig eine Dichtfläche 8 bildet. Wie an sich bekannt, dient die Dichtfläche 8 dazu, sich beim Herstellen einer Flanschverbindung mit einem Gegenstück zum Flanschelement 5 an dessen Gegen-Dichtfläche (nicht dargestellt) anzulegen und mittels einer Schraubverbindung eine Flächenpressung zwischen den beiden Dichtflächen zu erzeugen, die die Dichtheit der Flanschverbindung gewährleisten soll.

Anhand der Detailvergrößerung "X" ist erkennbar, dass sich der Balgbord 2 durch das Flanschelement 5 hindurch erstreckt und an dessen Stirnfläche 6 radial nach außen umgebördelt ist, so dass er einen Teil der Stirnfläche 6 des Flanschelements 5 überdeckt. Der umgebördelte Bord 2 erstreckt sich dabei ebenfalls in der radialen Ebene 7 der Dichtfläche 8 und liegt somit an dieser an. Dies entspricht der herkömmlichen Vorgehensweise nach dem Stand der Technik, wenn der Balgbord 2 gleichzeitig als Anschlussbord dient. Beim Herstellen einer Flanschverbindung kommt er zwischen die Dichtfläche 8 des Flanschelements 5 und die Gegen-Dichtfläche des Gegenstücks zum Flanschelement 5 zu liegen, wird zwischen diesen beiden verpresst und wird so ein Teil der Dichtfläche 8.

Im vorliegenden Ausführungsbeispiel ist der Balgbord 2 jedoch nicht der Anschlussbord im Sinne der vorliegenden Erfindung, sondern das Rohrelement 3 ist stirnseitig mit einer Verlängerung 9 versehen, die den Anschlussbord 10 im Sinne der vorliegenden Erfindung bildet. Denn dieser Anschlussbord 10 ist es letztendlich, der beim Herstellen einer Flanschverbindung ein Teil der Dichtfläche 8 des Flanschelements 5 wird, denn er überdeckt den umgebördelten Bereich des Balgbords 2 gegenüber dem Gegenstück zum Flanschelement 5 ganzflächig.

Der Anschlussbord 10 ist nicht wie bisher üblich so umgebördelt worden, dass er sich entlang der radialen Ebene 7 erstreckt. Vielmehr wurde er nur so weit umgebördelt, dass er zwischen sich und einer Längsachse 11 des flexiblen Leitungselements einen Winkel α < 90° einschließt. Der Anschlussbord 10 nimmt somit eine Trichterform an, die vorliegend die Form eines Kegels aufweist.

Durch die Trichterform des umgebördelten Anschlussbords 10 trifft eine Kante 12 am vorderen Ende 13 des Anschlussbords 10 auf die Gegen-Dichtfläche des Gegenstücks zum Flanschelement 5 auf und wird zur Dichtfläche 8 des Flanschelements 5 hin gedrückt. Hierbei ergibt sich eine Verpressung zwischen der Kante 12 des Anschlussbords 10 und der Gegen-Dichtfläche, wobei etwaige Unebenheiten in der Kante 12 egalisiert werden und entlang der Kante 12 eine umlaufende metallische Liniendichtung gebildet wird.

Figur 2 zeigt ein zweites Ausführungsbeispiel in einer gegenüber Figur 1 spiegelverkehrt angeordneten Darstellung, wobei sich dieses zweite Ausführungsbeispiel vom ersten Ausführungsbeispiel lediglich durch die Ausbildung des Flanschelements 5 unterscheidet. Das Flanschelement 5 ist hier nämlich nicht als herkömmlicher Rohrverbindungs-Flansch ausgebildet, sondern als V-Bord-Hälfte 14, die mit einer (nicht dargestellten) anderen V-Bord-Hälfte zusammenwirkend ein V-Bord bildet, welches mittels einer V-Schelle unter Ausbildung einer dichtenden Flächenpressung zwischen den Dichtflächen der beiden V-Bord-Hälften festgelegt werden kann. Die Ausbildung der Dichtfläche 8 sowie die Anordnung des Bords 2 und des Anschlussbords 10 sind ansonsten mit dem ersten Ausführungsbeispiel aus Figur 1 identisch.

In Figur 3 ist in einer Figur 1 entsprechenden Darstellung ein drittes Ausführungsbeispiel für ein erfindungsgemäß ausgestaltetes flexibles Leitungselement dargestellt. Dieses dritte Ausführungsbeispiel unterscheidet sich vom ersten Ausführungsbeispiel wiederum durch die unterschiedliche Ausbildung des Flanschelements 5. Dieses ist hier, was im Stand der Technik nicht üblich war, im radial innenliegenden Bereich seiner Stirnfläche 6 umlaufend abgeschrägt, so dass sich die Dichtfläche 8 lediglich auf einen radial außenliegenden Bereich der Stirnfläche 6 beschränkt. Der große Vorteil hierbei besteht darin, dass der Anschlussbord 10, der erfindungsgemäß so umgebördelt ist, dass er zwischen sich und der Längsachse 11 des flexiblen Leitungselements einen Winkel α < 90° einschließt, mit seiner vor dem Herstellen einer Flanschverbindung vorliegenden Trichterform an dem abgeschrägten, radial innenliegenden Bereich der Stirnfläche 6 des Flanschelements 5 anliegt. Dies gilt im Übrigen auch für den Bord 2 des Balgabschnitts 1, wobei es auf diesen in diesem Zusammenhang hier jedoch nicht ankommt.

Der abgeschrägte Bereich der Stirnfläche 6 des Flanschelements 5 ermöglicht, dass der Anschlussbord 10 beim Herstellen einer Flanschverbindung nicht in die im Stand der Technik bislang übliche radiale Ebene 7 der Dichtfläche 8 bewegt und zwischen den beiden Dichtflächen der beteiligten Flanschelemente flächig verpresst wird, sondern die Dimensionen sind in diesem Ausführungsbeispiel so gewählt, dass die Kante 12 des vorderen Endes 13 des Anschlussbords 10 axial über die radiale Ebene 7 der Dichtfläche 8 hinaussteht, ohne dass weitere Teile des Anschlussbords 10 über die radiale Ebene 7 überstehen würden. Beim Herstellen einer Flanschverbindung kann die umlaufende Kante 12 des Anschlussbords 10 demnach eine metallische umlaufende Liniendichtung mit der Gegen-Dichtfläche des Gegenstücks zum Flanschelement 5 bilden. Hierbei wird das vordere Ende 13 des Anschlussbords 10 durch den abgeschrägten Bereich der Stirnfläche 6 gestützt, so dass der Winkel α zwischen dem umgebördelten Bereich des Anschlussbords 10 und der Längsachse 11 des flexiblen Leitungselements im Wesentlichen konstant bleibt. Mit eine solchen Dimensionierung sind besonders hohe Flächenpressung an der umlaufenden Kante 12 des Anschlusbords 10 möglich. Dementsprechend sicher ist die Abdichtung der Flanschverbindung.

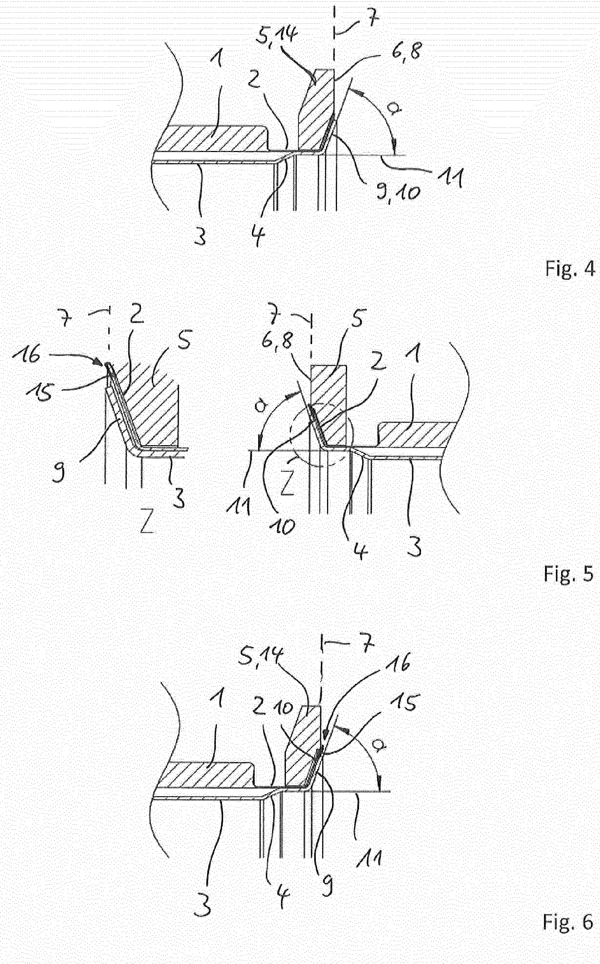

Das in Figur 4 dargestellte vierte Ausführungsbeispiel unterscheidet sich vom dritten Ausführungsbeispiel wiederum in zu den Figuren 1 und 2 analoger Weise. Denn das in Figur 4 dargestellte vierte Ausführungsbeispiel unterscheidet sich vom dritten Ausführungsbeispiel aus Figur 3 lediglich darin, dass das Flanschelement 5 kein herkömmlicher Rohrverbindungs-Flansch ist, sondern, analog zur Figur 2, eine Hälfte eines V-Bords zum Herstellen einer Verbindung mittels einer V-Schelle.

Das in Figur 5 dargestellte fünfte Ausführungsbeispiel stimmt in den meisten Punkten mit dem dritten Ausführungsbeispiel aus Figur 3 überein. Jedoch übernimmt hier der Bord 2 des Balgabschnitts 1 die Funktion des erfindungsgemäßen Anschlussbords 10 und steht mit seinem vorderen Ende 15 und einer entsprechenden Kante 16 über die radiale Ebene 7 der Dichtfläche 8 des Flanschelement 5 über, während die Verlängerung 9 des Rohrelements 3 hier zwar umgebördelt wurde und erfindungsgemäß trichterförmig ausgebildet ist, jedoch dessen vorderes Ende 13 so weit zurückspringt, dass es keinen Kontakt mit der Gegen-Dichtfläche des Gegenstücks zum Flanschelement 5 erhält. Die metallische Liniendichtung wird vielmehr von der Kante 16 bzw. dem vorderen Ende 15 des Bords 2 übernommen. Ansonsten ist das vorliegende Ausführungsbeispiel identisch wie das in Figur 3 dargestellte dritte Ausführungsbeispiel ausgebildet.

Das in Figur 6 dargestellte sechste Ausführungsbeispiel für ein erfindungsgemäßes flexibles Leitungselement bildet mit dem fünften Ausführungsbeispiel aus Figur 5 wiederum ein Paar, das den Paaren Figur 1 / Figur 2 bzw. Figur 3 / Figur 4 entspricht. Denn dieses sechste Ausführungsbeispiel unterscheidet sich wiederum von fünften Ausführungsbeispiel aus Figur 5 lediglich darin, dass das Flanschelement 5 nicht als herkömmlicher Rohrverbindungs-Flansch ausgebildet ist, sondern die Hälfte eines V-Bords bildet, um eine Rohrverbindung mittels V-Bord-Schellen herzustellen.

## Patentansprüche

1. Flexibles Leitungselement aus Metall, umfassend mindestens einen ringgewellten oder schraubengangförmig gewellten Balgabschnitt (1) und mindestens einen endständig angeordneten Anschlussbord (10) zum Anschließen des flexiblen Leitungselements an ein weiterführendes Leitungselement oder ein Anschlussteil, wobei am Anschlussbord (10) ein Flanschelement (5) mit einer Stirnfläche (6), von der zumindest ein Bereich als Dichtfläche (8) dient, angebracht ist und der Anschlussbord (10) an der Stirnfläche (6) des Flanschelements (5) radial nach außen weisend umgebördelt ist, so dass er beim Anschließen des flexiblen Leitungselements an ein weiterführendes Leitungselement oder ein Anschlussteil einen Teil der Stirnfläche (6) des Flanschelements (5) überdeckt und/oder einen Teil der Dichtfläche (8) bildet, wobei der umgebördelte Bereich des Anschlussbords (10) eine Trichterform aufweist und einen Winkel α < 90° zwischen sich und einer Längsachse (11) des flexiblen Leitungselements einschließt,
**dadurch gekennzeichnet,**
**dass** das Flanschelement (5) in demjenigen Bereich seiner Stirnfläche (6), der vom umgebördelten Bereich des Anschlussbords (10) überdeckt wird, trichterförmig ausgebildet ist, wobei der trichterförmige Bereich der Stirnfläche (6) des Flanschelements (5) so dimensioniert ist, dass der daran anliegende Anschlussbord (10) mit seinem stirnseitigen Ende (13, 15) eine umlaufende Kante (12, 16) bildet, die über eine radiale Ebene (7) der Dichtfläche (8) des Flanschelements (5) übersteht, um beim Anschließen des flexiblen Leitungselements an ein weiterführendes Leitungselement oder Anschlussteil, das ein Gegenstück zum Flanschelement (5) mit einer Gegen-Dichtfläche aufweist, an dieser Gegen-Dichtfläche eine umlaufende Liniendichtung zu bilden.

2. Flexibles Leitungselement nach Anspruch 1,
**dadurch gekennzeichnet,**
**dass** der umgebördelte Bereich des Anschlussbords (10) einen Winkel α von ca. 80° < α < 90°, und insbesondere von ca. 85° < α < 90° zwischen sich und der Längsachse (11) des flexiblen Leitungselements einschließt.

3. Flexibles Leitungselement nach einem der Ansprüche 1 oder 2,
**dadurch gekennzeichnet,**
**dass** der Anschlussbord (10) einstückig an den Balgabschnitt (1) angeformt ist.

4. Flexibles Leitungselement nach einem der Ansprüche 1 oder 2,
**dadurch gekennzeichnet,**
**dass** der Anschlussbord (10) durch eine stirnseitige Verlängerung (9) eines koaxial innerhalb des Balgabschnitts (1) angeordneten und mit diesem verbundenen Rohrelements (3) gebildet ist.

5. Flexibles Leitungselement nach mindestens einem der Ansprüche 1 bis 4,
**dadurch gekennzeichnet,**
**dass** ein einstückig am Balgabschnitt (1) angeformter Bord (2) an der Stirnfläche (6) des Flanschelements (5) radial nach außen weisend umgebördelt ist, so dass er beim Anschließen des flexiblen Leitungselements an ein weiterführendes Leitungselement oder ein Anschlussteil einen Teil der Stirnfläche (6) des Flanschelements (5) überdeckt, und dass gleichzeitig eine stirnseitige Verlängerung (9) eines koaxial innerhalb des Balgabschnitts (1) angeordneten und mit diesem verbundenen Rohrelements (3) den Anschlussbord (10) bildet.

6. Flexibles Leitungselement nach mindestens einem der Ansprüche 1 bis 5,
**dadurch gekennzeichnet,**
**dass** das Flanschelement (5) ein herkömmlicher Rohrverbindungs-Flansch, ein Sternflansch oder eine V-Bord-Hälfte (14) ist.

7. Flexibles Leitungselement nach mindestens einem der Ansprüche 1 bis 6,
**dadurch gekennzeichnet,**
**dass** es als Kompensator oder als Entkoppelelement zum Einbau in die Abgasanlage eines Kraftfahrzeugs mit Verbrennungsmotor ausgebildet ist.

## Claims

1. Flexible duct element made of metal, comprising at least one annularly corrugated or helically corrugated bellows section (1) and at least one terminally arranged connection cuff (10) for connecting the flexible duct element to a further duct element or to a connection part, wherein there is mounted on the connection cuff (10) a flange element (5) having an end face (6) at least one region of which serves as sealing face (8), and the connection cuff (10) is bent over so as to point radially outwards at the end face (6) of the flange element (5) so that on connection of the flexible duct element to a further duct element or to a connection part it covers a portion of the end face (6) of the flange element (5) and/or forms a portion of the sealing face (8), the bent-over region of the connection cuff (10) having a funnel shape and enclosing an angle α < 90° between itself and a longitudinal axis (11) of the flexible duct element,
**characterised in that**
the flange element (5) is funnel-shaped **in that** region of its end face (6) which is covered by the bent-over region of the connection cuff (10), the funnel-shaped region of the end face (6) of the flange element (5) being dimensioned so that the adjoining connection cuff (10) forms with its end-face end (13, 15) a circumferential edge (12, 16) which projects beyond a radial plane (7) of the sealing face (8) of the flange element (5) in order that, on connection of the flexible duct element to a further duct element or connection part which has a counterpart to the flange element (5) with a counter-sealing face, a circumferential linear seal is formed at that counter-sealing face.

2. Flexible duct element according to claim 1,
**characterised in that**
the bent-over region of the connection cuff (10) encloses an angle α of approximately 80° < α < 90° and especially of approximately 85°< α < 90° between itself and the longitudinal axis (11) of the flexible duct element.

3. Flexible duct element according to either one of claims 1 and 2,
**characterised in that**
the connection cuff (10) is formed integrally with the bellows section (1).

4. Flexible duct element according to either one of claims 1 and 2,
**characterised in that**
the connection cuff (10) is formed by an end-face-side extension (9) of a pipe element (3) which is arranged coaxially inside the bellows section (1) and is joined thereto.

5. Flexible duct element according to at least one of claims 1 to 4,
**characterised in that**
a rim (2), formed integrally with the bellows section (1), is bent over so as to point radially outwards at the end face (6) of the flange element (5) so that on connection of the flexible duct element to a further duct element or to a connection part it covers a portion of the end face (6) of the flange element (5), and at the same time an end-face-side extension (9) of a pipe element (3) arranged coaxially inside the bellows section (1) and joined thereto forms the connection cuff (10).

6. Flexible duct element according to at least one of claims 1 to 5,
**characterised in that**
the flange element (5) is a conventional pipe connection flange, a star flange or a V-cuff half (14).

7. Flexible duct element according to at least one of claims 1 to 6,
**characterised in that**
it is in the form of an expansion joint or in the form of a decoupling element for installation in the exhaust gas system of a motor vehicle having an internal combustion engine.

## Revendications

1. Elément de conduite flexible en métal, comprenant au moins un tronçon (1) formant soufflet pourvu d'ondulations annulaires ou hélicoïdales, et au moins une aile de raccordement (10) occupant une position extrême et destinée au rattachement dudit élément de conduite flexible à un élément de conduite situé dans la continuité, ou à une partie de raccordement, un élément de bridage (5), muni d'une face frontale (6) dont au moins une région remplit la fonction d'une surface d'étanchement (8), étant ménagé sur l'aile de raccordement (10), laquelle aile de raccordement (10) est évasée avec orientation vers l'extérieur dans le sens radial, au niveau de la face frontale (6) de l'élément de bridage (5), de telle sorte qu'elle recouvre une partie de ladite face frontale (6) dudit élément de bridage (5) et/ou forme une partie de la surface d'étanchement (8), au stade du rattachement de l'élément de conduite flexible à un élément de conduite situé dans la continuité, ou à une partie de raccordement, sachant que la région évasée de ladite aile de raccordement (10) revêt la forme d'un entonnoir et décrit un angle α < 90° entre elle-même et un axe longitudinal (11) dudit élément de conduite flexible,
**caractérisé par le fait**
**que** l'élément de bridage (5) est de réalisation infundibuliforme dans la région de sa face frontale (6) qui est recouverte par la région évasée de l'aile de raccordement (10), la région infundibuliforme de ladite face frontale (6) de l'élément de bridage (5) étant dimensionnée de façon telle que ladite aile de raccordement (10) venant s'y adosser forme, par son extrémité frontale (13, 15), une arête périphérique (12, 16) faisant saillie au-delà d'un plan radial (7) de la surface d'étanchement (8) dudit élément de bridage (5), de manière à constituer, lors du rattachement de l'élément de conduite flexible à un élément de conduite ou à une partie de raccordement situé(e) dans la continuité et procurant une pièce complémentaire dudit élément de bridage (5), offrant une surface complémentaire d'étanchement, une garniture d'étanchement linéaire à la périphérie de cette surface complémentaire d'étanchement.

2. Elément de conduite flexible selon la revendication 1,
**caractérisé par le fait**
**que** la région évasée de l'aile de raccordement (10) décrit, entre elle-même et l'axe longitudinal (11) dudit élément de conduite flexible, un angle α mesurant environ 80°< α< 90°, et notamment 85°< α< 90°.

3. Elément de conduite flexible selon l'une des revendications 1 ou 2,
**caractérisé par le fait**
**que** l'aile de raccordement (10) est façonnée d'un seul tenant avec le tronçon (1) formant soufflet.

4. Elément de conduite flexible selon l'une des revendications 1 ou 2,
**caractérisé par le fait**
**que** l'aile de raccordement (10) est matérialisée par un prolongement frontal (9) d'un élément tubulaire (3) logé coaxialement à l'intérieur du tronçon (1) formant soufflet, et relié à ce dernier.

5. Elément de conduite flexible selon au moins l'une des revendications 1 à 4,
**caractérisé par le fait**
**qu'**une zone marginale (2), faisant corps avec le tronçon (1) formant soufflet, est évasée avec orientation vers l'extérieur dans le sens radial, au niveau de la face frontale (6) de l'élément de bridage (5), de telle sorte qu'elle recouvre une partie de ladite face frontale (6) dudit élément de bridage (5) au stade du rattachement dudit élément de conduite flexible à un élément de conduite situé dans la continuité, ou à une partie de raccordement ; et par le fait qu'un prolongement frontal (9) d'un élément tubulaire (3) logé coaxialement à l'intérieur dudit tronçon (1) formant soufflet, et relié à ce dernier, forme simultanément l'aile de raccordement (10).

6. Elément de conduite flexible selon au moins l'une des revendications 1 à 5,
**caractérisé par le fait**
**que** l'élément de bridage (5) se présente comme une bride classique de jonction tubulaire, comme une bride en étoile ou comme la moitié (14) d'une aile en V.

7. Elément de conduite flexible selon au moins l'une des revendications 1 à 6,
**caractérisé par le fait**
**qu'**il est réalisé sous la forme d'un compensateur ou d'un élément de découplage, dévolu à l'intégration dans le système d'échappement d'un véhicule automobile équipé d'un moteur à combustion interne.
